# EUROPEAN PATENT APPLICATION

(11) **EP 3 078 529 A2**
(43) Date of publication of application: **12.10.2016**
(21) Application number: 16163617.0
(22) Date of filing: 04.04.2016
(51) Int. Cl.: B60K 15/01, B60K 15/03, B60K 15/07

(54) **APPARATUS FOR MOUNTING A GAS TANK OF A VEHICLE AND GAS TANK ASSEMBLY USING THE SAME**

(30) Priority: 08.04.2015 KR 20150049806
(71) Applicant: ILJIN Composites Co., Ltd., Jeollabuk-do 55322 (KR)
(72) Inventor: Heo, Seok Bong, 55135 Jeollabuk-do (BL); Choi, Bong Won, 55316 Jeollabuk-do (KR); Park, Jae Sung, 54131 Jeollabuk-do (KR)
(74) Representative: Zech, Stefan Markus

(57) **Abstract**

Apparatus for mounting a gas tank (102,1), including:
a plurality of base frames (110) including supporting parts supporting
a plurality of gas tanks (102) and fixing parts fixed to a vehicle;
a plurality of fixing means coupled to the base frames (110) and configured to fix the plurality of gas tanks (102) to the base frames (110);
a plurality of guide frames configured to connect the plurality of base frames (110) to each other and extended in a longitudinal direction of the gas tank (102,1);
and a gas pipe fastening means (144,146) provided at the guide frame disposed between the plurality of gas tanks (102) among the plurality of guide frames.

## Description

### CROSS-REFERENCE TO RELATED APPLICATIONS

This application claims priority to and the benefit of Korean Patent Application No. 10-2015-0049806 filed in the Korean Intellectual Property Office on April 8, 2015, the entire contents of which are incorporated herein by reference.

### TECHNICAL FIELD

The present invention relates to an apparatus for mounting a gas tank and a gas tank assembly using the same, and more particularly, to an apparatus for mounting a gas tank for storing fuel gas, such as Liquefied Natural Gas (LNG), to a vehicle.

### BACKGROUND ART

In general, fuel, such as gasoline or diesel, is widely used as fuel for a vehicle, but alternative fuel discharging the small amount of contaminant materials is increasingly used aiming to decrease a bad influence on an environment. Compressed Natural Gas (CNG) is fuel widely used as alternative fuel, and gas, such as natural gas, coal gas, oil gas, oil well gas, and coalpit gas, are compressed at 200 atmospheric pressure or more, and the gas in a liquefied state is used.

In a case of the CNG, a degree of discharge of the contaminant material is considerably low compared to the fuel in the related art, and the CNG may be used without a great change in an existing engine of a vehicle. However, the CNG is used in a compressed state at a high pressure as described above, so that a means for safely storing the CNG and stably supplying fuel to a fuel supply system is required.

Particularly, in order to use the CNG, a gas tank endurable to a high pressure and a pressure reducing valve for reducing pressure of high-pressure compressed gas and supplying the pressure-reduced compressed gas from the gas tank to the fuel supply system are required. Accordingly, the gas tank having a special structure, which is capable of stably storing gas from impact applied during an operation of a vehicle has been used. An example of the gas tank is disclosed in "Korean Utility Model No. 1996-0005988".

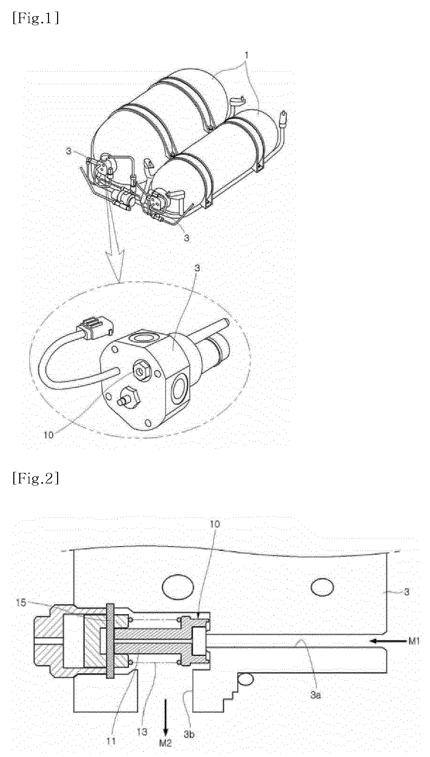

In the meantime, when impact is applied to the vehicle and fire is generated in the vehicle, the gas tank needs to rapidly discharge internal high-pressure gas before the gas tank is damaged due to the fire. To this end, a pressure relief device (PRD) is mounted to the pressure reducing valve. An example of the gas tank provided with the PRD is illustrated in FIGs. 1 and 2.

Referring to FIG. 1, in order to compulsorily discharge internal high-pressure gas before a gas tank 1 is damaged due to fire of a vehicle, a pressure reducing valve 3 for supplying and discharging fuel is mounted to the gas tank 1, and a PRD 10 is mounted to the pressure reducing valve 3. The PRD 10 is installed between a tank connection path 3a and an external-side connection path 3b provided at the pressure reducing valve 3 as illustrated in FIG. 2, and includes a piston 11, a spring 13, and a fusible metal 15 well-melted in heat.

The fusible metal 15 ordinarily restricts a movement of the piston 11, and when a temperature of the pressure reducing valve 3 reaches about 110°C, the fusible metal 15 is melted by heat, and when the fusible metal 15 is melted, the piston 11 moves to a left side from a state of FIG. 2 by gas pressure within the gas tank 1.

Accordingly, the tank connection path 3a and the external-side connection path 3b are connected to each other, so that gas within the gas tank 1 may be rapidly discharged to the outside as represented by arrows M1 and M2 and thus it is possible to prevent the gas tank 1 from being exploded.

Here, when a plurality of tanks is provided, the pressure reducing valve is provided at each of the gas tanks. In this case, when fire is locally generated in the vehicle, particularly, fire is locally generated at a side, at which the pressure reducing valve is not provided, it may be difficult to discharge gas.

### SUMMARY OF THE INVENTION

The present invention is conceived to solve the disadvantages of the related art, and has been made in an effort to provide an apparatus for mounting a gas tank, which is capable of safely discharging gas within a tank even when fire is locally generated.

The present invention has also been made in an effort to provide a gas tank assembly including the apparatus for mounting the gas tank.

An exemplary embodiment of the present invention provides an apparatus for mounting a gas tank, including: a plurality of base frames including supporting parts supporting a plurality of gas tanks and fixing parts fixed to a vehicle; a plurality of fixing means coupled to the base frames and configured to fix the plurality of gas tanks to the base frames; a plurality of guide frames configured to connect the plurality of base frames to each other and extended in a longitudinal direction of the gas tank; and a gas pipe fastening means provided at the guide frame disposed between the plurality of gas tanks among the plurality of guide frames, in which the gas pipe fastening means is disposed to be fastened with a gas pipe connecting the two adjacent tanks.

The base frame may have an arch shape, and the plurality of guide frames may include end guide frames coupled to areas around both ends of the base frame, respectively, and a center guide frame disposed between the end guide frames, and the gas pipe fastening means may be formed at the center guide frame.

The gas pipe fastening means may include a plurality of fastening brackets disposed to protrude from the center guide frame.

The fastening bracket may include a hook part protruding from a surface of the fastening bracket.

The base frame may be symmetrically formed with respect to the center guide frame.

Another exemplary embodiment of the present invention provides a gas tank assembly, including: a plurality of base frames including supporting parts supporting a plurality of gas tanks and fixing parts fixed to a vehicle; a plurality of fixing means coupled to the base frames and configured to fix the plurality of gas tanks to the base frames; a plurality of guide frames configured to connect the plurality of base frames to each other and extended in a longitudinal direction of the gas tank; a plurality of gas tanks fastened by the base frames and the fixing means; and a plurality of pressure reducing valves provided at the gas tanks, respectively, in which at least a part of the pressure reducing valves is positioned at one end of the guide frame, and the remaining pressure reducing valves are positioned at the other end of the guide frame.

The gas tank assembly may further include: a gas pipe fastening means provided at the guide frame disposed between the plurality of gas tanks among the plurality of guide frames; and a mutual connecting pipe fastened to the gas pipe fastening means, and having both ends connected with the pressure reducing valves, respectively.

The gas pipe fastening means may include a plurality of fastening brackets disposed to protrude from the center guide frame.

The fastening bracket may include a hook part protruding from a surface of the fastening bracket.

The plurality of gas tanks may be disposed in a zigzag form.

According to the exemplary embodiment of the present invention, a means capable of fixing a gas pipe connecting the plurality of gas tanks to each other is provided at the guide frame extended between the gas tanks, so that it is possible to fix the gas pipe passing between the plurality of gas tanks between the gas tanks, and as a result, it is possible to dispose the plurality of gas tanks in a zigzag form. Accordingly, when fire is locally generated, for example, even fire does not surround the entire tanks, but is generated only at one side of the tank, the pressure reducing valves disposed at any one side react the fire and discharge gas, thereby further improving safety.

Further, the fixing means for fixing the gas pipe to the guide frame configuring the mounting apparatus fixing the gas tank is provided, so that it is possible to more easily fix the gas pie, and simplify even an entire configuration of the mounting apparatus.

### BRIEF DESCRIPTION OF THE DRAWINGS

FIG. 1 is a perspective view illustrating a general apparatus for mounting a gas tank in the related art.
FIG. 2 is a cross-sectional view schematically illustrating an internal structure of a pressure reducing valve illustrated in FIG. 1.
FIG. 3 is a perspective view illustrating a gas tank assembly to which an apparatus for mounting a gas tank according to an exemplary embodiment of the present invention is applied.
FIG. 4 is an exploded perspective view illustrating the exemplary embodiment illustrated in FIG. 3.
FIG. 5 is a perspective view illustrating a configuration except for a gas tank and a cover in FIG. 3.

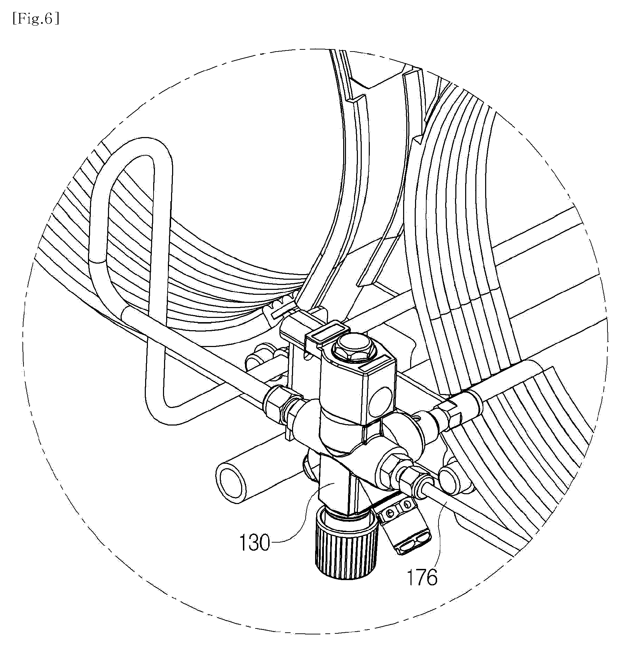

FIG. 6 is a perspective view illustrating an enlarged pressure reducing valve of FIG. 5.

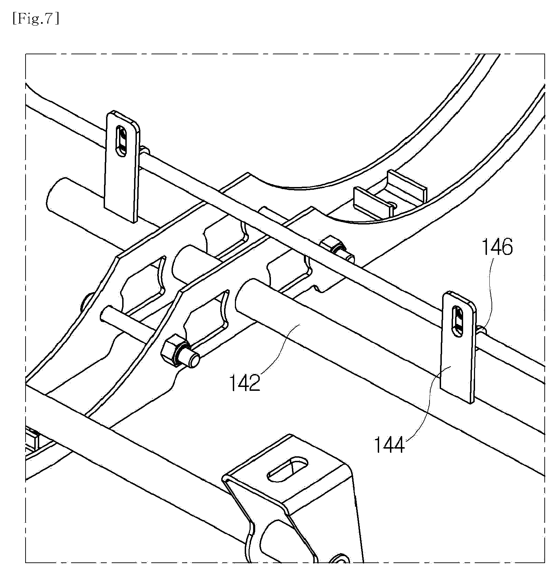

FIG. 7 is a perspective view illustrating an enlarged fastening bracket part of FIG. 5.

### DETAILED DESCRIPTION

Hereinafter, an apparatus for mounting a gas tank according to an exemplary embodiment of the present invention and a gas tank assembly will be described in detail with reference to the accompanying drawings.

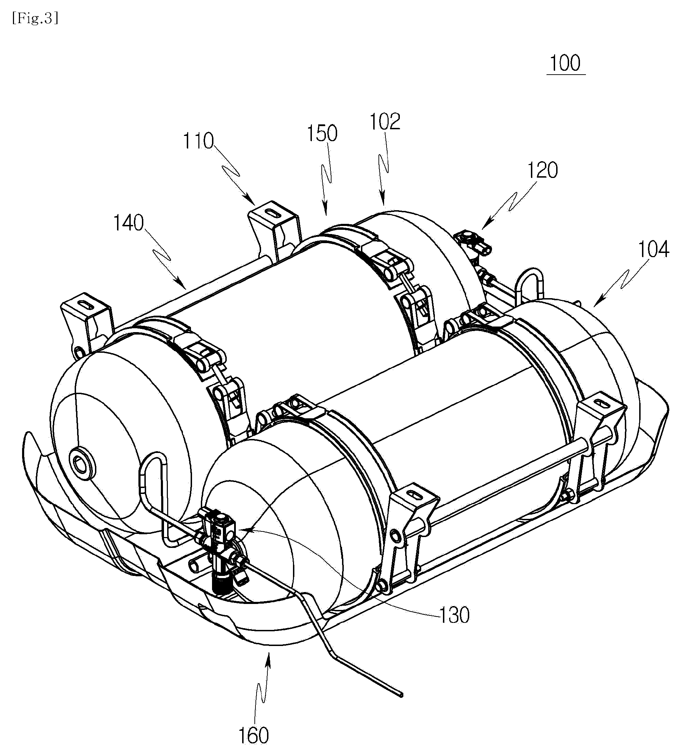

FIG. 3 is a perspective view illustrating a gas tank assembly to which an apparatus for mounting a gas tank according to an exemplary embodiment of the present invention is applied, and referring to FIG. 3, the exemplary embodiment 100 includes two gas tanks 102 and 104. Inlets of the gas tanks 102 and 104 are disposed while crossing each other. The gas tanks are mounted to a vehicle and serve as storing places storing high-pressure compressed gas supplied as fuel.

Particularly, the gas tank includes a cylindrical cylinder having an empty internal side, hemispherical liners provided at both ends of the cylinder, and fiber reinforced plastic layers provided on external surfaces of the liners.

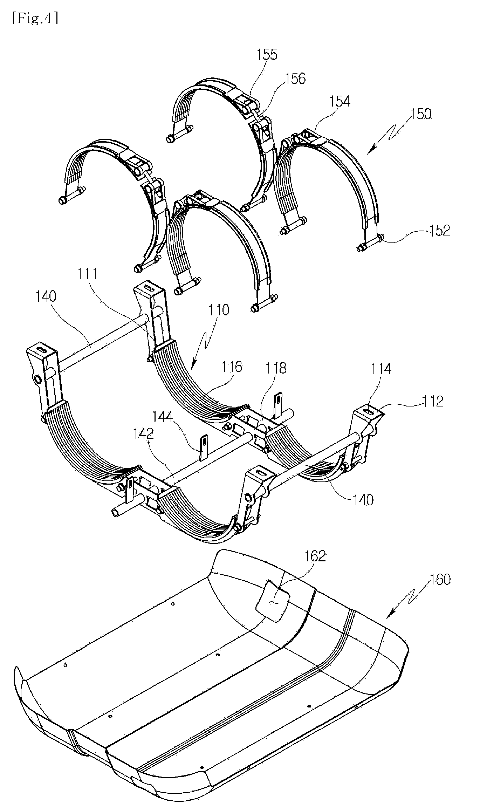

In the meantime, base frames 110 are provided as a part of the apparatus for mounting the gas tanks 102 and 104 to the vehicle. The base frame 110 is formed in an approximate arch shape as illustrated in FIG. 4, and is provided with supporting parts 116 for supporting the respective gas tanks at both sides based on a center of the base frame 110. The supporting part 116 has an approximately semicircular shape so as to correspond to an external appearance of the gas tank.

Fixing parts 112 fixing the base frame 110 to the vehicle are provided at both ends of the base frame. The fixing parts 112 may be formed so as to be matched to a surface form of a corresponding vehicle body, and have plane forms in FIGs. 3 and 4. Further, a bolt inserting hole 114, to which a fastening bolt (not illustrated) as a fixing means for fixing the base frame to the vehicle body is fastened, is formed in the fixing part 112. A reinforcing part 118 is provided at an approximately center portion of the base frame. The reinforcing part 118 is formed to be thicker than other parts so as to prevent the base frame from being dropped in a down direction due to weight of the gas tank.

Further, a plurality of base frames is provided, and two base frames are provided in the illustrated example. The two base frames 110 are disposed while being spaced apart from each other by an appropriate distance according to a length of the gas tank, and guide frames for connecting the base frames 110 to each other are provided.

A total of three guide frames is provided as illustrated, and the guide frame has a rod shape extended in a longitudinal direction thereof. Here, for convenience of the description, the guide frames provided at both ends of the base frame are referred to as end guide frames 140, and the guide frame provided at a center of the base frame is referred to as a center guide frame 142. Here, a plurality of fastening brackets 144 is formed at the center guide frame 142. Each of the fastening brackets 144 has a plate form protruding from the center guide frame 142 in a predetermined direction, and includes a hook part to be described below so as to easily fasten a gas pipe.

In the meantime, pressure reducing valves 120 and 130 are mounted to the gas tanks 102 and 104, respectively. A pressure relief device (PRD, not illustrated) including a fusible metal is provided in the pressure reducing valves 120 and 130, so that compressed gas stored inside the gas tank may be discharged to the outside by operating the PRD at fire.

Further, referring to FIGs. 3 and 4, a fixing belt 150 as a fixing means for fixing the gas tank to the base frame is provided. The fixing belt 150 includes a pair of belts, of which one end 152 is hinge-coupled to a hinge coupling part 111 of the base frame as illustrated in FIG. 4, and tightening parts 154 and 155 are formed at the other ends of the belts. Tightening bolts 156 are fastened to the two tightening parts, so that the fixing belt may fix the gas tank to the base frame by a rotation of the tightening bolt.

Last, a protecting cover 160 is provided on a lower surface of the gas tank. The protecting cover 160 is provided in order to protect the gas tank from foreign substances from a road surface or other impact, and is detachably mounted to the base frame. Further, observation windows 162 for checking a state of the pressure reducing valve even without separating the protecting cover are formed. In this case, it can be seen that the two observation windows 162 may be disposed in a zigzag form in accordance with the positions of the pressure reducing valves.

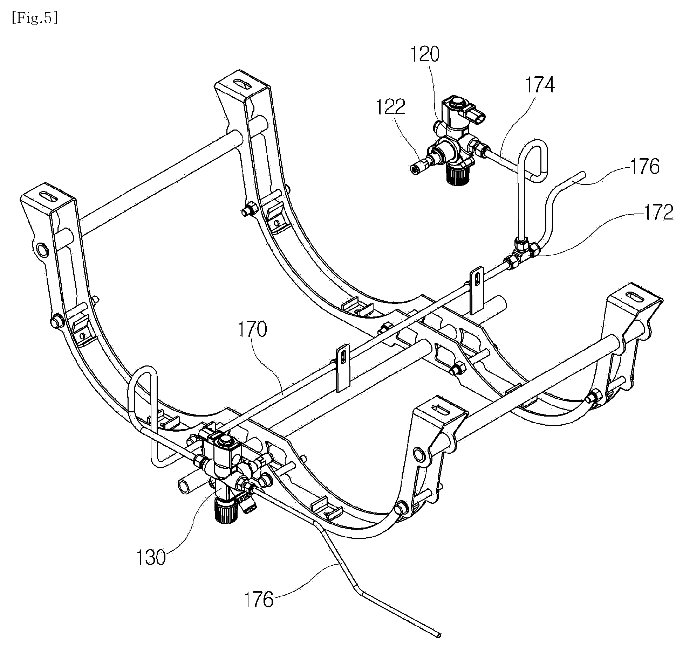

Referring to FIG. 5, a disposition structure of a gas pipe provided at the gas tank assembly is illustrated. As illustrated in FIG. 5, the gas tank assembly includes a mutual connecting pipe 170 for connecting the two pressure reducing valves. The mutual connecting pipe 170 may serve to distribute gas supplied from the outside to the two tanks, or collect gas discharged from the two tanks and supply the collected gas to a fuel injection system. Further, the mutual connecting pipe 170 is connected to each of the two pressure reducing valves and is applied as a pressurizing line, so that when gas is discharged from any one pressure reducing valve, the pressure is also transferred to the other pressure reducing valve, so that gas is discharged from all of the connected pressure reducing valves.

In the present exemplary embodiment, the two pressure reducing valves are disposed in a zigzag form, so that in order to connect the two pressure reducing valves to each other, the mutual connecting pipe 170 needs to be extended in a longitudinal direction of the gas tank. Further, one end of the mutual connecting pipe 170 may be connected with a T-shaped connector 172, and one side of the T-shaped connector 172 may be connected with a first pipe 174 connected with the pressure reducing valve 120. Here, the remaining pipes except for the mutual connecting pipe 170 may be arbitrarily disposed according to a structure of a vehicle, to which the gas tank is mounted. For example, as illustrated, a second pipe 176 connected with a fuel supply system or a gas charging port of the vehicle may also be connected to the pressure reducing valve 130 or the T-shaped connector.

In the meantime, the fastening bracket 144 protrudes from the center guide frame 142 by a predetermined distance, and is provided with the hook part 146 for fastening the mutual connecting pipe 170 at one surface of the fastening bracket 144. The hook part 146 may have a predetermined form capable of fixing the mutual connecting pipe 170. In the illustrated example, a total of three fastening brackets is disposed along the center guide frame 142 in the longitudinal direction of the gas tank, so that the mutual connecting pipe 170 may be stably supported without being dropped or transformed.

In the present exemplary embodiment, the method of charging gas in the two gas tanks, or the method of supplying fuel to a fuel supply system from the gas tank may adopt a method used in an existing gas tank assembly, so that a description thereof will be omitted. If fire is generated in the vehicle or fire is generated around the gas tank, the PRD mounted at each pressure reducing valve is heated. When a temperature of the PRD is heated to 110°C, at which the fusible metal may be melt, as described above, the gas charged inside the gas tank is discharged to the outside while the fusible metal is melted.

When a range of the fire is wide, the gas may be discharged from the two gas tanks while all of the two pressure reducing valves are heated. By contrast, when a range of the fire is small to influence only the pressure reducing valve installed at any one of the two pressure reducing valves, for example, the pressure reducing valve installed at the gas tank 102 disposed at a left side (based on FIG. 3), the PRD provided at the corresponding pressure reducing valve is first operated to discharge gas, and the discharge pressure is transferred to the other pressure reducing valve connected by the mutual connecting pipe 170, so that the gas is discharged. That is, even when fire is generated at any one side based on the tank, the gas may be discharged from the entire tanks.

In the related art, two pressure reducing valves are all disposed at only one side of the gas tanks, so that when fire is generated at a side, at which the pressure reducing valve is installed, gas may be fortunately discharged, but when fire is generated at the opposite side of the pressure reducing valve, gas is not discharged until the tank is considerably heated, so that there are concerns that a pressure within the tank is excessively increased due to the fire.

However, according to the exemplary embodiment, even when fire is locally generated at one side of the tank, gas may be discharged from the entire gas tanks, thereby considerably improving safety. In the illustrated example, the two tanks are provided, but even in a case where the larger number of tanks is provided, when gas is discharged from one of the pressure reducing valves connected by the mutual connecting pipe, gas may be discharged by all of the connected pressure reducing valves.

## Claims

1. An apparatus for mounting a gas tank, comprising:
a plurality of base frames including supporting parts supporting a plurality of gas tanks and fixing parts fixed to a vehicle;
a plurality of fixing means coupled to the base frames and configured to fix the plurality of gas tanks to the base frames;
a plurality of guide frames configured to connect the plurality of base frames to each other and extended in a longitudinal direction of the gas tank; and
a gas pipe fastening means provided at the guide frame disposed between the plurality of gas tanks among the plurality of guide frames,
wherein the gas pipe fastening means is disposed to be fastened with a gas pipe connecting the two adjacent tanks.

2. The apparatus of claim 1, wherein the base frame has an arch shape, and
the plurality of guide frames includes end guide frames coupled to areas around both ends of the base frame, respectively, and a center guide frame disposed between the end guide frames, and
the gas pipe fastening means is formed at the center guide frame.

3. The apparatus of claim 2, wherein the gas pipe fastening means includes a plurality of fastening brackets disposed to protrude from the center guide frame.

4. The apparatus of claim 3, wherein the fastening bracket includes a hook part protruding from a surface of the fastening bracket.

5. The apparatus of claim 2, wherein the base frame is symmetrically formed with respect to the center guide frame.

6. A gas tank assembly, comprising:
a plurality of base frames including supporting parts supporting a plurality of gas tanks and fixing parts fixed to a vehicle;
a plurality of fixing means coupled to the base frames and configured to fix the plurality of gas tanks to the base frames;
a plurality of guide frames configured to connect the plurality of base frames to each other and extended in a longitudinal direction of the gas tank;
a plurality of gas tanks fastened by the base frames and the fixing means; and
a plurality of pressure reducing valves provided at the gas tanks, respectively,
wherein at least a part of the pressure reducing valves is positioned at one end of the guide frame, and the remaining pressure reducing valves are positioned at the other end of the guide frame.

7. The gas tank assembly of claim 6, further comprising:
a gas pipe fastening means provided at the guide frame disposed between the plurality of gas tanks among the plurality of guide frames; and
a mutual connecting pipe fastened to the gas pipe fastening means, and having both ends connected with the pressure reducing valves, respectively.

8. The gas tank assembly of claim 7, wherein the gas pipe fastening means includes a plurality of fastening brackets disposed to protrude from the center guide frame.

9. The gas tank assembly of claim 8, wherein the fastening bracket includes a hook part protruding from a surface of the fastening bracket.

10. The gas tank assembly of claim 6, wherein the plurality of gas tanks is disposed in a zigzag form.
